(19) Europäisches Patentamt
European Patent Office
Office européen des brevets

(11) **EP 2 691 679 B1**

(12) **FASCICULE DE BREVET EUROPEEN**

(45) Date de publication et mention
de la délivrance du brevet:
**06.12.2017 Bulletin 2017/49**

(51) Int Cl.:
***B29C 53/80*** *(2006.01)*    ***B29C 53/58*** *(2006.01)*
***B29C 53/70*** *(2006.01)*    ***F16L 11/10*** *(2006.01)*
***F16L 11/08*** *(2006.01)*

(21) Numéro de dépôt: **12717408.4**

(22) Date de dépôt: **29.03.2012**

(86) Numéro de dépôt international:
**PCT/FR2012/050662**

(87) Numéro de publication internationale:
**WO 2012/131260 (04.10.2012 Gazette 2012/40)**

(54) **CONDUITE TUBULAIRE FLEXIBLE SOUS-MARINE POUR GRANDE PROFONDEUR ET PROCEDE DE FABRICATION**

FLEXIBLES ROHRFÖRMIGES UNTERWASSERROHR FÜR GROSSE TIEFEN UND HERSTELLUNGSVERFAHREN DAFÜR

FLEXIBLE TUBULAR UNDERWATER PIPE FOR GREAT DEPTHS, AND METHOD FOR MANUFACTURING SAME

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **29.03.2011 FR 1152609**

(43) Date de publication de la demande:
**05.02.2014 Bulletin 2014/06**

(73) Titulaire: **Technip France**
**92400 Courbevoie (FR)**

(72) Inventeurs:
• **FELIX-HENRY, Antoine**
**F-76000 Rouen (FR)**
• **ESTRIER, Pascal**
**F-76490 Saint-Wandrille-Rançon (FR)**

(74) Mandataire: **Gendron, Vincent Christian et al**
**Fédit-Loriot**
**38, avenue Hoche**
**75008 Paris (FR)**

(56) Documents cités:
**WO-A1-03/083343**     **WO-A2-2008/135663**

EP 2 691 679 B1

**Description**

La présente invention se rapporte à un procédé de fabrication d'une conduite tubulaire flexible sous-marine pour le transport de fluides du type hydrocarbures ou autre, destinée à être utilisée notamment à grande profondeur. Elle concerne également une conduite obtenue selon le procédé objet de l'invention.

Elle concerne plus particulièrement les conduites de type non lié (« unbonded » en anglais) décrites notamment dans les documents normatifs suivants publiés par l'API (American Petroleum Institute) :

- API 17J Specification for Unbonded Flexible Pipe.
- API RP 17B Recommended practice for Flexible Pipe.

Aussi, afin de fabriquer ces conduits tubulaires flexibles on fournit une structure tubulaire étanche, constituée essentiellement, de l'intérieur vers l'extérieur, d'une gaine étanche ou gaine de pression, d'une voûte de pression faite d'un fil de forme enroulé à pas courts autour de la gaine, et d'au moins une couche de fils d'armure enroulés en hélice à pas long autour de ladite voûte de pression. Dans la présente demande, le terme « à pas court » correspond à un angle d'hélice compris entre 70° et 90°, tandis que le terme « à pas long » correspond à un angle d'hélice inférieur à 60°. L'hydrocarbure est destiné à venir s'écouler à l'intérieur de la gaine étanche. La voûte de pression vient reprendre les efforts radiaux qui s'exercent sur la conduite, tandis que la couche de fils d'armure vient reprendre les efforts axiaux de traction.

En outre, on recouvre usuellement la couche de fils d'armure d'une gaine externe d'étanchéité, de manière à préserver les différentes couches sous-jacentes précitées de l'eau environnante.

Certains conduites flexibles ne comportent aucune voûte de pression, mais présentent dans ce cas des armures croisées enroulées avec un angle d'hélice proche de 55°, cet angle particulier permettant aux armures de reprendre à la fois des efforts radiaux et axiaux.

Ces conduites, lorsqu'elles sont installées en milieu sous-marin, sont soumises à des pressions externes qui peuvent être plus élevés que la pression interne qui règne à l'intérieur. Aussi, il peut se produire une compression axiale qui est connue de l'homme du métier sous le nom d'effet de fond inverse (« reverse end cap effect » en langue anglaise). Cet effet tend à raccourcir la conduite. Ces efforts de compression axiale peuvent atteindre un niveau très élevé. Par exemple, une conduite de transport de gaz d'un diamètre extérieur de 300 mm installée à une profondeur de 2000 m peut subir un effort de compression axiale de l'ordre de 140 tonnes lorsqu'elle est dépressurisée. La conduite est alors soumise à une pression externe d'environ 200 bar, tandis que la pression interne est voisine de 1 bar.

L'effet de fond inverse a ainsi tendance à comprimer axialement la conduite flexible, et partant, à raccourcir sa longueur, ce qui tend à augmenter son diamètre. Ce phénomène a pour conséquence de provoquer également un gonflement des nappes d'armures de traction, c'est à dire une excursion radiale des fils d'armure. Dans le cas où la gaine externe de la conduite est étanche, la pression hydrostatique régnant à l'extérieur de la conduite s'oppose efficacement au gonflement des couches d'armure de traction. Par contre, si la gaine externe n'est plus étanche, par exemple à la suite d'une déchirure accidentelle, l'eau envahit l'intérieur de la gaine externe et cette dernière n'est plus appliquée à force à la pression hydrostatique contre les couches de fils d'armure et ne s'oppose donc plus au gonflement. Par suite, en l'absence d'un moyen additionnel ayant pour fonction de limiter ce gonflement, les fils composant les nappes d'armures de traction peuvent flamber selon un mode radial, ce qui peut provoquer une déformation locale irréversible desdites couches de fils d'armure, lesquelles prennent une forme de « cage d'oiseau » (« bird cage » en anglais). La conduite flexible est alors localement dénaturée.

Une solution connue permettant de réduire ce risque de flambement radial en « cage d'oiseau » consiste à enrouler en hélice à pas court, autour des couches de fils d'armure de traction, des rubans renforcés de fibres d'aramide, lesquels rubans présentent une grande résistance mécanique en traction suivant leur axe longitudinal. Cette couche anti-gonflement permet précisément de limiter le gonflement des couches de fils d'armure de traction. Ces rubans présentent en outre une grande souplesse en fluxion, ce qui facilite les opérations de manutention et d'enroulement autour des nappes d'armures. Enfin, à caractéristiques mécaniques égales, ils sont beaucoup plus légers que des rubans métalliques, ce qui permet de réduire le poids de la conduite flexible.

On pourra notamment se référer aux documents WO03/083343, FR2926347 et WO2008/135663, lesquels décrivent de tels types de conduites.

Cependant, cette solution présente un certain nombre d'inconvénients. Tout d'abord, ces rubans renforcés en fibres aramides sont très coûteux. En outre, cette solution ne résout pas totalement le problème de flambement latéral des fils d'armure, (« lateral buckling » en langue anglaise), notamment lorsque la conduite est simultanément soumise à des variations de courbure, notamment à proximité du fond marin. Dans cette zone la conduite peut être sollicitée simultanément en compression axiale, du fait de l'effet de fond inverse, et en flexion, du fait des mouvements du support flottant auquel la conduite est raccordée. Dans ces conditions, dès lors que les armures n'ont plus la possibilité de gonfler librement selon un mode radial, il reste possible qu'elles flambent selon un mode latéral ou circonférentiel.

Aussi, un problème qui se pose et que vise à résoudre la présente invention, est de fournir une conduite flexible qui non seulement peut être fabriquée à un coût avantageux, mais aussi qui résiste mieux à l'effet de fond inverse.

Dans ce but, la présente invention propose, selon un premier aspect, un procédé de fabrication d'une conduite tubulaire flexible sous-marine selon la revendication 1.

Ainsi, une caractéristique de l'invention réside dans l'étirement du matériau déformable de l'élément longitudinal durant l'enroulement autour de la couche de fils d'armure et ce, en tenant compte de la valeur limite d'élasticité $\sigma_E$ dudit matériau déformable.

On étire, de préférence, ledit matériau suivant un allongement relatif correspondant à une contrainte de tension $\sigma_0$ comprise entre ladite valeur limite d'élasticité $\sigma_E$ et le vingtième de ladite valeur limite d'élasticité $\sigma_E$.

En outre, avantageusement, ladite contrainte de tension $\sigma_0$ est comprise entre le vingtième et le tiers de ladite valeur limite d'élasticité $\sigma_E$. Préférentiellement, ladite contrainte de tension $\sigma_0$ est comprise entre le dixième et le quart de ladite valeur limite d'élasticité $\sigma_E$.

Au surplus, on forme avantageusement une gaine externe étanche autour de ladite couche de maintien afin de protéger l'intérieur de la conduite.

Aussi, le gonflement des armures est-il atténué lorsque, d'une part la conduite immergée est soumise à un effet de fond inverse important et que d'autre part la gaine externe n'est plus étanche. Bien qu'elle le soit généralement, il se peut qu'une déchirure accidentelle provoque une inondation de l'espace annulaire compris entre la gaine de pression et, précisément la gaine externe, et l'espace annulaire se retrouve alors à la pression hydrostatique. Or, il s'avère que le gonflement des armures est nettement plus faible lorsque le matériau déformable de l'élément longitudinal a été préalablement pré-tensionné selon l'invention, en comparaison des armures entourées d'un élément longitudinal enroulé sans tension ou à une tension faible liée à la fabrication conformément à l'art antérieur.

Contrairement à ce qu'on pouvait imaginer, le fait de pré-tensionner l'élément longitudinal de la couche anti-gonflement, n'augmente pas la contrainte maximale axiale qu'il aura à endurer au cours de la vie de la conduite tubulaire. Cette modification affecte uniquement la durée pendant laquelle il est sollicité en traction.

Préférentiellement, on enroule une pluralité d'éléments longitudinaux continus pour former ladite couche de maintien anti-gonflement de manière à accroître plus encore la résistance au gonflement radial des armures. En outre, ledit au moins un élément longitudinal continu est formé en une bande, ce qui facilite son application. Dans le cas de la mise en oeuvre d'une pluralité de bandes, elles sont enroulées simultanément autour des armures de traction comme on l'expliquera par la suite dans la description.

La contrainte de tension $\sigma_0$ est définie comme étant la contrainte de pré-tension moyenne dans une section transverse de l'élément longitudinal continu. Par suite $\sigma_0$ est égale au ratio de la pré-tension $T_0$ par la section transverse de l'élément longitudinal continu.

La valeur limite d'élasticité $\sigma_E$ du matériau déformable est mesurée en effectuant un essai de traction sur un échantillon de l'élément longitudinal continu, essai classique permettant d'obtenir une courbe de traction représentant l'évolution de la contrainte moyenne de tension en fonction de l'allongement de l'échantillon. Tant que la contrainte appliquée à l'échantillon reste inférieure à la valeur limite d'élasticité $\sigma_E$, la courbe de traction présente un caractère linéaire, l'allongement étant alors proportionnel à la contrainte, et les déformations restant réversibles. Dès lors que la contrainte appliquée devient supérieure à $\sigma_E$, l'échantillon se déforme irréversiblement et la courbe de traction perd sa linéarité initiale. A partir de cette courbe de traction, l'homme du métier peut aisément déterminer la valeur limite d'élasticité $\sigma_E$, encore appelée limite élastique, qui est donc la contrainte moyenne de tension dans la section de l'élément longitudinal continu, au point de transition entre d'une part la zone de comportement linéaire et réversible et d'autre part la zone des déformations irréversibles. Dans le cas où l'élément longitudinal continu est soit entièrement métallique, soit renforcé avec des fibres ou des câbles métalliques, il existe une zone de déformation plastique entre la limite élastique et la limite à la rupture, la limite élastique étant alors nettement inférieure à la limite à la rupture. Dans le cas où l'élément longitudinal continu est renforcé avec des fibres d'aramide, de carbone ou de verre, il n'y a quasiment pas de zone ductile, la limite élastique étant alors quasiment confondue avec la limite à la rupture.

Grâce à la méthode selon l'invention, on réduit le gonflement des armures, par rapport aux méthodes selon l'art antérieur, sans pour autant augmenter le nombre et/ou l'épaisseur et/ou la résistance des bandes dudit matériau déformable, c'est-à-dire sans augmenter les coûts en matière première. Au surplus, ainsi qu'on l'expliquera ci-après dans la description détaillée, il est envisageable de réduire le nombre de bandes du matériau déformable par rapport à celui des conduites de l'art antérieur, tout en obtenant des propriétés semblable de résistance au gonflement des armures.

Par ailleurs, le fait de réduire plus encore le gonflement a un effet bénéfique vis-à-vis de la résistance à la compression axiale de la conduite, Plus le gonflement est faible, moins les armures ont de chance de se chevaucher, elles sont donc plus stables, ce qui améliore aussi indirectement la résistance au flambement latéral. Pour éviter le chevauchement des armures, on dimensionne la couche de maintien anti-gonflement de telle sorte que le gonflement radial des fils d'armure reste inférieur à leur épaisseur, et plus avantageusement à leur demi épaisseur.

Le procédé selon l'invention est avantageusement mis en oeuvre sur des structures tubulaires étanches présentant un diamètre supérieur à 250 millimètres, car le gonflement des armures est sensiblement proportionnel au diamètre des conduites.

Au surplus, le procédé selon l'invention est avantageusement mis en oeuvre sur des structures tubulaires dont lesdits fils d'armure présentent une épaisseur inférieure à 6 millimètres, préférentiellement inférieure à 3mm. L'invention est d'autant plus avantageuse que l'épaisseur desdits fils d'armure est faible, cas elle permet alors de limiter efficacement le gonflement en deçà de l'épaisseur desdits fils. C'est par exemple le cas des armures composites en carbone époxy présentant une épaisseur de l'ordre de 1 millimètre. Si on souhaite faire travailler de telles conduites en compression axiale, il est nécessaire d'équiper la conduite d'une couche de maintien très performante capable de maintenir le gonflement en deçà de 1 millimètre d'amplitude et préférentiellement en dessous de 0,5 millimètre. Selon l'art antérieur, de telles couches sont très coûteuses, puisqu'il est nécessaire de superposer parfois jusqu'à 6 à 8 couches de bandes en Kevlar®, chaque bande ayant une épaisseur de l'ordre de 0.6 millimètre, pour répondre au besoin. Le fait de prétensionner ces bandes permet d'obtenir le même résultat en économisant jusqu'à 4 couches, comme on l'expliquera plus en détail dans la suite de la description.

Par ailleurs, le procédé selon l'invention est avantageusement mis en oeuvre sur des structures tubulaires étanches présentant des fils d'armure enroulés à pas long selon un angle d'armage supérieur ou égal à 20°. Le gonflement est une fonction croissante de l'angle d'enroulement des armures en hélice. L'invention est donc d'autant plus avantageuse que l'angle d'armage est élevé. Ceci est le cas pour les conduites présentant un angle d'armage proche de 55°, notamment lorsque ces structures présentent aussi un diamètre important, comme par exemple les structures smoothbore de transport de gaz du type de celles divulguées dans le document WO2008/145861. Elle permet là aussi de réduire significativement le nombre de couches de bandes.

L'objet de l'invention permet tout aussi bien de réduire les possibilités de gonflement sans pour autant réduire le nombre de couches ni le coût, de manière à d'améliorer la résistance à la compression axiale de la conduite dans des conditions extrêmes de profondeur d'eau et de sollicitions dynamiques, que de réduire le nombre de couches et par conséquent le coût pour une réduction des possibilités de gonflement identique à celles de l'art antérieur.

En outre, la dite tension longitudinale $T_0$ est avantageusement supérieure ou égale à 250 daN, plus avantageusement supérieure ou égal à 350 daN, encore plus avantageusement supérieure ou égale à 500 daN, et préférentiellement supérieure ou égal à 1000 daN. Dans la présente demande, les tensions sont exprimées en deca newton, de symbole daN. Les niveaux de tension ci-dessus sont très supérieurs à ceux de la pratique antérieure, et leur mise en oeuvre nécessite l'emploi de nouvelles installations bien plus puissantes et coûteuses.

En outre, selon un autre mode de réalisation, le ratio $T_0 / L$ entre d'une part ladite tension longitudinale $T_0$ exprimée en deca newtons, et d'autre part la largeur L dudit élément longitudinal continu exprimée en centimètres (symbole cm), est supérieur ou égal à 20 daN/cm, avantageusement supérieur ou égal à 40 daN/cm et préférentiellement supérieur ou égal à 80 daN/cm.

D'autres particularités et avantages de l'invention ressortiront à la lecture de la description faite ci-après d'un mode de réalisation particulier de l'invention, donné à titre indicatif mais non limitatif, en référence aux dessins annexés sur lesquels :

- la Figure 1 est une vue schématique en perspective montrant la structure d'une conduite tubulaire flexible conforme à l'invention ;
- la Figure 2 est une vue schématique montrant une installation de fabrication d'une conduite tubulaire flexible selon l'invention ;
- la Figure 3 est une vue schématique transversale de détail de l'installation représentée sur la Figure 2, selon une première variante de réalisation ;
- la Figure 4 est une vue schématique transversale de détail de l'installation représentée sur la Figure 2, selon une seconde variante de réalisation ;
- les Figures 5A et 5B sont des vue en perspective montrant la section de la conduite tubulaire flexible illustrée sur la Figure 1 ; et,
- la Figure 6 est un graphique illustrant le comportement de la conduite illustrée sur la Figure 1.

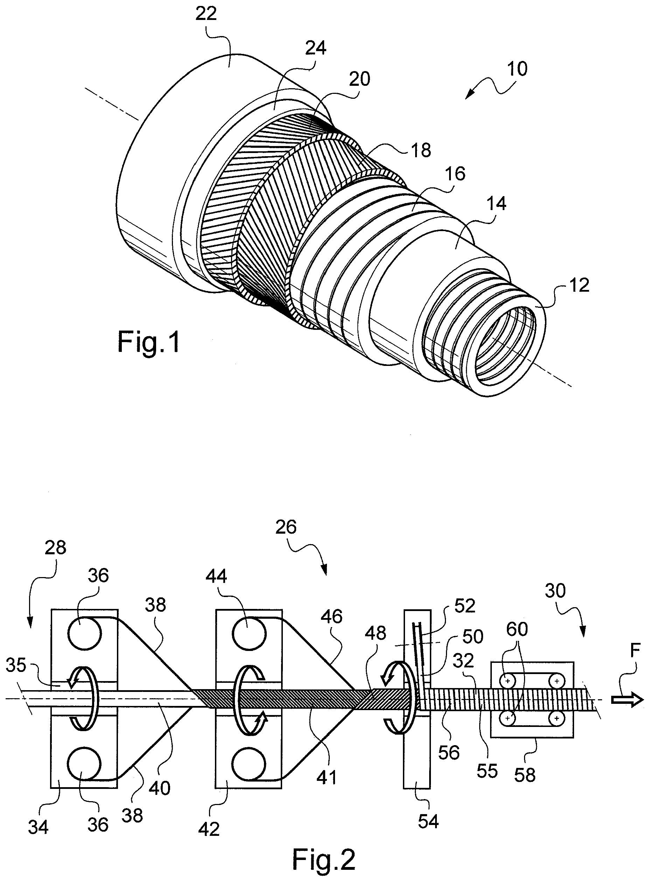

La Figure 1 illustre une conduite flexible 10 objet de la présente invention et obtenue selon le procédé également objet de l'invention et que l'on décrira ci-après. Cette conduite est de type « rough bore » mais l'invention s'applique aussi aux conduites de type « smooth bore ». La conduite est dite « rough bore » car elle comprend comme couche la plus interne, une carcasse interne 12 faite d'un fil de forme agrafé. Ensuite, de l'intérieur vers l'extérieur, elle comprend une gaine interne d'étanchéité 14, une voûte de pression 16, une paire de nappes d'armures croisées de tension 18, 20, et une gaine externe de protection 22. En outre, la conduite 10 comporte au moins une couche anti-gonflement 24 objet de l'invention, entourant les nappes d'armures de traction 18, 20, et réalisée par enroulement d'éléments longitudinaux faits de bandes d'un matériau synthétique déformable. D'autres formes d'éléments longitudinaux peuvent être mises en oeuvre, par exemple des cordes synthétiques.

On décrira maintenant en référence à la Figure 2, une installation d'armage 26 permettant de mettre en oeuvre le procédé de fabrication conforme à l'invention pour fabriquer une conduite flexible. L'installation d'armage 26 s'étend longitudinalement entre un amont 28 et un aval 30, et un tronçon de conduite tubulaire flexible 32 en cours de fabrication s'étend à travers l'installation d'armage 26 entre l'amont 28 et l'aval 30. La conduite tubulaire flexible est entraînée en translation selon la flèche F de l'amont 28 vers l'aval 30.

L'installation d'armage 26 comprend, vers l'amont 38, une première roue support 34 présentant un premier centre 35 que traverse une première portion de section 40. La première roue support 34 comprend une pluralité de premières bobines 36, par exemple quatre-vingts, sur chacune desquelles est enroulé un premier fil d'armure 38. La première roue support 34 est entraînée en rotation dans un sens donné pour enrouler les premiers fils d'armure 38 en hélices jointives autour de la portion de section 40, et en appui sur la voûte de pression, repérée 16 sur la Figure 1. Une première couche d'armure de traction est alors formée sur une deuxième portion 41.

L'installation d'armage 26 comprend également, espacée de la première roue support 34, vers l'amont 38, une seconde roue support 42, sensiblement identique à la première, mais entraînée en sens inverse audit sens donné. Elle comporte une pluralité de secondes bobines 44 de seconds fils d'armure 46 lesquels sont enroulés en hélices jointives de manière croisée sur les premiers fils d'armure 38. Une troisième portion 48 est recouverte d'une deuxième couche d'armure de traction.

La troisième portion 48 va alors être recouverte d'une bande anti-gonflement 50, laquelle est stockée sur une bobine à bande 52 montée sur une spiraleuse 54. On décrira ci-après en détail la spiraleuse, laquelle permet d'enrouler en hélice la bande anti-gonflement 50 pour former des spirales jointives 55. Une quatrième portion 56 est alors recouverte de la bande anti-gonflement 50 et elle vient en prise dans un dispositif d'entraînement 58 comprenant au moins deux trains de chenille 60. Ce dispositif permet de tirer la conduite à travers l'installation d'armage pour réaliser simultanément les différentes couches précitées.

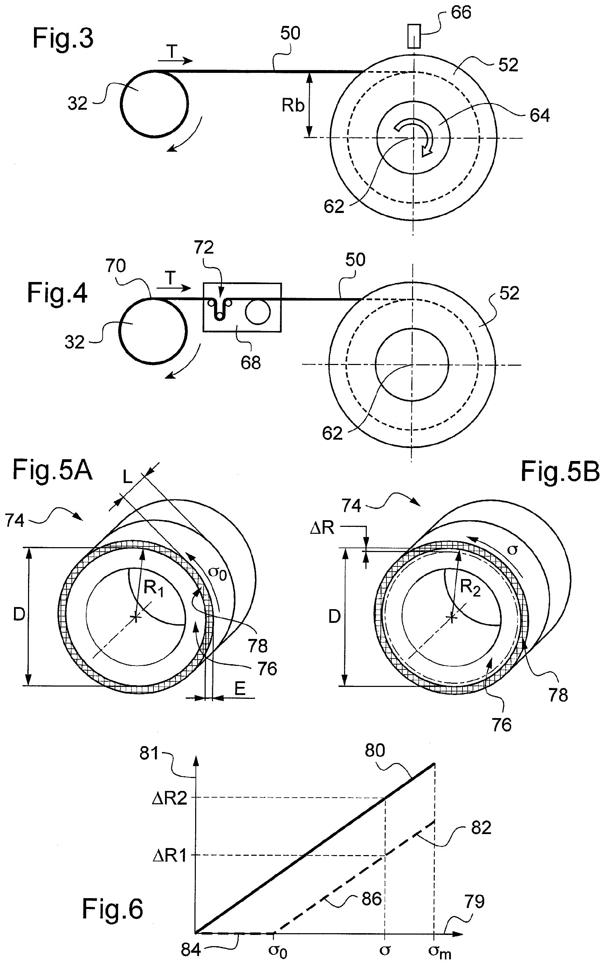

On détaillera maintenant en référence à la Figure 3, un premier mode de réalisation de la spiraleuse 54, laquelle permet d'appliquer la bande anti-gonflement 50 en lui imprimant une tension T.

Ainsi qu'on l'expliquera ci-après plus en détail, la bande anti-gonflement 50 est réalisée dans un matériau synthétique déformable fait de fibres tissées, par exemple en fibres d'aramide. Selon l'invention, la bande 50 est étirée selon une tension longitudinale $T_0$ de manière à étirer ledit matériau déformable suivant un allongement relatif correspondant à une contrainte de tension $\sigma_0$ inférieure à la valeur limite d'élasticité $\sigma_E$ dudit matériau déformable, par exemple à $\sigma_E$ est compris entre 5% et 30% de la valeur limite d'élasticité $\sigma_E$.

On retrouve sur la Figure 3, la conduite flexible 32 en section droite et la bande anti-gonflement 50 stockée enroulée sur la bobine à bande 52. La bobine à bande 52 présente un arbre de rotation libre, dont la direction est sensiblement inclinée par rapport à une direction parallèle à la conduite 32 de manière à former les spirales jointives 55. La spiraleuse permet d'entraîner la bobine à bande 52 en rotation autour de la conduite flexible 32 selon le sens des aiguille d'une montre sur la Figure 3, tandis qu'elle se dévide librement en conservant l'inclinaison de son arbre par rapport à la conduite 32.

Selon ce premier mode de réalisation, la tension T est ajustée par freinage de la bobine à bande 52. L'arbre de la bobine est équipé d'un frein 64 qui s'oppose à la rotation de cette dernière. Plus le freinage est fort, plus la tension T imprimée à la bande 50 est forte. Afin que la tension reste sensiblement constante, il convient d'asservir le freinage sur l'arbre de la bobine 62 au rayon extérieur Rb de la bande enroulée sur la bobine 52. En début de fabrication, la bobine est pleine et Rb est maximum. Au fur et à mesure du dévidage de la bobine, Rb diminue jusqu'à atteindre une valeur minimale lorsque la bobine est quasiment vide. Or, la tension imprimée à la bande 50 est égale au rapport du couple de freinage appliqué par le frein sur l'arbre de la bobine 62 et du rayon Rb.

Afin de maintenir la tension T constante et par conséquent de compenser la diminution du rayon extérieur Rb il convient de diminuer parallèlement le couple de freinage. Aussi, on équipe la bobine à bande 52 de moyens de mesure 66 du rayon Rb, par exemple un capteur du type galet roulant en appui sur la bande enroulée et monté sur un support mobile de type vérin ou ressort, ou bien un capteur de distance, et on diminue la couple de freinage en temps réel en fonction des mesures du rayon extérieur Rb.

Selon un deuxième mode de réalisation illustré sur la figure 4, où l'on retrouve la conduite 32, la bande 50 et la bobine 52 sur laquelle elle est enroulée, la tension T de la bande 50 est maintenue à une valeur constante par des moyens de freinage contrôlés 68, disposés entre la bobine à bande 52 et le point tangent 70 de pose sur le flexible. Ces moyens de freinage contrôlés 68 peuvent par exemple consister en un cabestan équipé d'un frein asservi en fonction d'une mesure de tension effectuée par un système à trois galets 72 équipé d'un capteur d'effort.

On se référera à présent aux Figures 4 montrant schématiquement des sections de conduite munies d'une bande anti-gonflement, pour illustrer le procéder de fabrication selon l'invention.

Sur la Figure 5A, est représentée une section de conduite tubulaire flexible 74 présentant de l'intérieur vers l'extérieur, une structure tubulaire étanche 76 recouverte de deux couches de fils d'armure et d'une bande anti-gonflement 78. Cette dernière, de diamètre interne D et de rayon interne R (R=D/2), présente une largeur L et une épaisseur E et elle est enroulée en hélice à spires jointives avec un angle d'hélice voisin de 90°.

Lors de la fabrication de la conduite, la bande est donc enroulée sous une tension longitudinale $T_0$ autour des

armures de traction, ce qui génère une précontrainte circonférentielle $\sigma_0$ inférieure à la limite élastique du matériau de la bande. Cette précontrainte $\sigma_0$ a pour effet de serrer les armures de traction et engendre une pression initiale de contact $P_0$ entre la bande 78 et les armures. Cette pression initiale de contact $P_0$, encore appelée pression de pré-serrage, est sensiblement égale à la précontrainte circonférentielle $\sigma_0$ facteur du quotient de l'épaisseur de la bande 78 et du rayon R du diamètre intérieur de la bande 78 ($Po \approx \sigma_0 E/R$).

Par ailleurs, la tension longitudinale $T_0$ est égale à la précontrainte circonférentielle $\sigma_0$ facteur de l'épaisseur E de la bande et de sa largeur L. Aussi, la tension longitudinale $T_0$ est-elle sensiblement égale à la pression de pré-serrage $P_0$ facteur de la largeur de la bande 78 et du rayon R du diamètre intérieur de la bande 78 ($T_0 \approx P_0 L R$).

De plus, il a été constaté que de façon surprenante un effet bénéfique de la bande 50 se produisait dès que la pression de pré-serrage $P_0$ entre la bande 78 et les armures de traction était supérieure à seulement quelques pour cents de la pression hydrostatique maximale $P_{ext}$ à laquelle doit pouvoir résister la conduite, c'est-à-dire à la pression hydrostatique sur le fond marin. Comme cela sera illustré plus bas, l'effet bénéfique se produit lorsque la pression de pré-serrage $P_0$ est supérieure à 4% de la pression hydrostatique $P_{ext}$, et avantageusement supérieure à 10% de Pext. On observera toutefois que les moyens à mettre en oeuvre pour imprimer à la bande une tension longitudinale correspondante doivent être adaptés compte tenu du niveau très important des efforts.

Par exemple, si la conduite doit être mise en oeuvre à 3.000 m de profondeur, la pression hydrostatique maximale $P_{ext}$ à laquelle elle doit pouvoir résister est d'environ 300 bar, et la précontrainte circonférentielle $\sigma_0$ déterminée grâce à la tension longitudinale $T_0$ de la bande lors de la pose, doit avantageusement être fixée de sorte que la pression de pré-serrage $P_0$ soit supérieure à 12 bar, par exemple 30 bar. Dans ces conditions, puisque la pression de pré-serrage $P_0$ est nettement inférieure à la pression hydrostatique $P_{ext}$, les couches métalliques internes de la conduite supportent facilement cette pression de pré-serrage $P_0$.

L'effet de fond inverse, qui se produit lorsque la gaine externe de protection est perforée et que l'annulaire est inondé, engendre un effort axial F de compression axiale qui tend à faire gonfler les nappes d'armures. C'est alors la bande qui limite et contient ce gonflement.

De ce fait, il se crée alors à l'interface entre les armures et la bande une pression radiale de contact $P_c$, pression que nous appellerons pression de gonflement. Cette pression de gonflement $P_c$, qui s'oppose à la pression de pré-serrage $P_0$. La pression de gonflement $P_c$ est d'autant plus grande que F est grand, et varie de façon sensiblement linéaire en fonction de F.

Dans le cas où la pression de gonflement $P_c$ reste inférieure à la pression de pré-serrage $P_0$, les armures ne gonflent pas, et le rayon intérieur de la bande 78 reste alors égal à R. La bande 78 conservant alors un allongement constant, la contrainte circonférentielle dans la bande 78 reste elle aussi constante et égale à $\sigma_0$.

Comme illustré sur la Figure 5B, lorsque la pression de gonflement $P_c$ est supérieure à la pression de pré-serrage $P_0$, les armures gonflent, et le rayon intérieur de la bande 78 augmente de la valeur $\Delta R1$, en passant de la valeur R à l'état initial, à la valeur $R+\Delta R1$ après gonflement. Du fait de ce gonflement la bande 78 subit un allongement relatif égal au ratio $A1 / R$, allongement qui génère dans ladite bande une contrainte circonférentielle additionnelle $\sigma_c$ qui est égale au produit du ratio $\Delta R1 / R$ par le module d'élasticité en traction G de la bande ($\sigma_c = G \Delta R1 / R$). A ce stade, la contrainte circonférentielle totale $\sigma$ dans la bande 78 est la somme de la pré-contrainte $\sigma_0$ et de la contrainte additionnelle $\sigma_c$ ($\sigma = \sigma_0 + \sigma_c$). Par ailleurs, la contrainte circonférentielle totale $\sigma$ dans la bande 78 est sensiblement proportionnelle à la pression de gonflement $P_c$ et au rayon de la bande R et inversement proportionnelle à l'épaisseur de la bande E ($\sigma \approx P_c R/E$). Il s'en suit que le gonflement $\Delta R1$ est sensiblement proportionnel à la différence entre la pression de gonflement $P_c$ et la pression de pré-serrage $P_0$ :

$$\Delta R1 \;=\; R\,\sigma_c\,/\,G \;=\; R\,(\sigma - \sigma_0)\,/\,G \;\approx\; R^2\,(P_c - P_0)\,/\,(G\,E)$$

Par ailleurs, si on considère une conduite de l'art antérieur dont la bande 78 n'a pas été pré-contrainte ($\sigma_0 \approx 0$), mais dont les autres caractéristiques sont par ailleurs identiques à celles de la conduite illustrée à la figure 5A, et qu'on applique à cette conduite le même effort F de compression axiale, on obtient un gonflement $\Delta R2$ des armures donné par les équations suivantes :

$$\Delta R2 \;=\; R\,\sigma\,/\,G \;\approx\; R^2\,P_c\,/\,(G\,E)$$

Il s'en suit que $\Delta R2$ est supérieur à $\Delta R1$, ce qui montre que l'application d'une pré-contrainte à la bande 78 selon la présente invention permet de réduire le gonflement des armures.

Cet effet technique est illustré graphiquement sur la Figure 6. Sur cette figure, on a représenté un graphique sur lequel la contrainte circonférentielle $\sigma$ figure en abscisse 79, tandis que la variation du rayon interne R de la bande 78 figure en ordonnée 81. De plus, on a représenté en trait plein une première courbe de variation 80 d'une bande anti-gonflement non pré-contrainte lors de la pose (art antérieur) et en trait interrompu une seconde courbe de variation 82 de la bande 78 présentant une pré-contrainte $\sigma_0$. On observera que ces deux courbes sont des droites parallèles dont la pente est proportionnelle au rayon R et inversement proportionnelle au module d'élasticité G.

Ainsi, tant que l'effort F axial est faible et le demeure suffisamment pour que la pression de gonflement $P_c$ que les armures tendent à exercer contre la face interne de la bande reste inférieure à la pression de pré-contrainte $P_0$, il n'y a aucun gonflement. La contrainte circonférentielle $\sigma$ demeure égale à la précontrainte circonférentielle $\sigma_0$ et on se situe sur le point 84 de la seconde courbe 82.

En revanche, dès lors que l'effort F axial devient suffisamment fort pour engendrer une contre pression de gonflement $P_c$ supérieure à la pression de contact $P_0$ associée à la précontrainte circonférentielle $\sigma_0$, les armures et la bandes commencent à gonfler en suivant la pente 86 de la seconde courbe de variation 82.

Ainsi, pour une contrainte circonférentielle $\sigma$ donnée, la variation de rayon interne $\Delta R1$ pour la bande anti-gonflement pré-contrainte et correspondant à la seconde courbe de variation 82, est inférieure à la variation $\Delta R2$ pour la bande anti-gonflement sans pré-contrainte et correspondant à la première courbe de variation 80. On remarquera de plus sur le graphique de la Figure 6, que le gain sur le gonflement est d'autant plus grand que la pré-contrainte circonférentielle $\sigma_0$ est élevée.

Concernant les contraintes circonférentielles, l'invention se distingue de l'art antérieur non pas par le niveau maximal de contraintes que la bande anti-gonflement pourra subir durant sa vie, niveau qui reste le même, mais plutôt par la durée pendant laquelle les contraintes de niveau inférieur sont appliquées. Pour illustrer ce point, prenons l'exemple d'une conduite ayant une durée de vie de vingt ans et devant subir un effort axial F de compression, uniquement pendant sa dernière année de service. Selon l'art antérieur, la contrainte circonférentielle dans la bande anti-gonflement reste quasiment nulle pendant les dix neuf premières années ans puis devient égale à $\sigma$ pendant la dernière année. Selon la présente invention, la contrainte circonférentielle dans la bande anti-gonflement est égale à la pré-contrainte $\sigma_0$ pendant les dix neuf premières années puis devient égale à $\sigma$ pendant la dernière année.

Dans tous les cas de figure, il convient bien entendu que la pré-contrainte circonférentielle $\sigma_0$ et la contrainte $\sigma$ restent inférieures à la limite élastique de la bande. Avantageusement, par mesure de sécurité, on détermine une contrainte maximale $\sigma_m$ à ne pas dépasser, $\sigma_m$ étant inférieur à $\sigma_E$, $\sigma_m$ étant typiquement compris entre la moitié et les trois quarts de $\sigma_E$.

Selon le procédé de fabrication conforme à l'invention tel que décrit ci-dessus, il est fait référence à une seule bande anti-gonflement enroulée en spirale. Cette présentation a permis de présenter simplement le problème posé et sa solution. Toutefois, pour les conduites tubulaires flexibles, selon l'art antérieur, il est usuel d'enrouler une pluralité de bandes anti-gonflement. Il est également nécessaire de mettre en oeuvre plusieurs bandes anti-gonflement selon l'invention, mais en moins grand nombre, ce qui représente un avantage économique.

On va décrire différents modes de mise en oeuvre illustrant ces conduites.

En reprenant la Figure 1, selon un premier mode de mise en oeuvre, la conduite tubulaire flexible est une conduite de diamètre intérieur 280 mm qui comporte de l'intérieur vers l'extérieur les couches suivantes :

- une carcasse interne en feuillard agrafé inoxydable d'épaisseur 15 mm ;
- une gaine de pression d'épaisseur 14 mm ;
- une voûte de pression en fil de forme agrafé d'épaisseur 21 mm ;
- une première couche polymérique anti-usure d'épaisseur 1.5 mm ;
- une première nappe d'armures d'épaisseur 5 mm ;
- une deuxième couche polymérique anti-usure d'épaisseur 1.5 mm ;
- une deuxième nappe d'armures d'épaisseur 5 mm ;
- une troisième couche polymérique anti-usure d'épaisseur 1.5 mm ;
- une troisième nappe d'armures d'épaisseur 5 mm ;
- une quatrième couche polymérique anti-usure d'épaisseur 1.5 mm ;
- une quatrième nappe d'armures d'épaisseur 5mm ;
- une couche anti-gonflement en bandes de Kevlar®; et,
- une gaine externe polymérique d'épaisseur 13 mm.

Cette structure de diamètre important est destinée à être utilisée à des profondeurs très importantes voisines de 3.000 m. C'est la raison pour laquelle elle comporte une carcasse et une voûte de pression très épaisses, ainsi que 4 nappes d'armures elles aussi relativement épaisses.

Selon l'art antérieur, la couche anti-gonflement d'une telle conduite doit comporter huit couches de bandes tissées en Kevlar® à haut module d'élasticité. Chaque couche de bande présente une épaisseur de l'ordre de 0,5 mm, soit 4 mm au total pour les huit couches superposées. Chacune de ces huit couches est réalisée par enroulement à spires jointives et à pas court grâce à une installation de bobinage analogue à l'appareil 54 de la Figure 2. Les bandes anti-gonflement sont des bandes tissées de largeur L égale à 130 mm, de 0,5 mm d'épaisseur, présentant une résistance en traction au seuil d'élasticité de l'ordre de 8600 daN, une limite élastique moyenne $\sigma_E$ de l'ordre de 1300 MPa, et un module d'élasticité moyen de l'ordre de 105 GPa.

Selon la pratique antérieure, la tension de pose de ces bandes est faible, typiquement de l'ordre de 5 daN à 20 daN , et les machines utilisées pour enrouler ces bandes autour de la conduite sont des machines légères et de faible puissance. Ces machines de faible coût sont généralement appelées « rubaneuses » ou « bobineuses », par oppositions aux « spiraleuses » qui sont des machines beaucoup plus puissantes et onéreuses.

Cette conduite est conçue pour résister par 3.000 m de profondeur à un effet de fond inverse très important dans le cas le plus défavorable où d'une part la conduite est dépressurisée avec 300 bar à l'extérieur et 1 bar à l'intérieur, et d'autre part la gaine externe a perdu son étanchéité et l'annulaire est inondé. Dans ces conditions extrêmes, les 8 couches de bande de Kevlar® précitées sont capables de limiter le gonflement radial des armures en deçà de 1,5 mm. Ce gonflement maximal étant nettement inférieur à l'épaisseur des fils d'armure de 5 mm, le risque de chevauchement des fils est conjuré et la stabilité des nappes d'armures assurée. Dans ces conditions de gonflement maximal, les bandes sont soumises à une tension longitudinale sous charge de l'ordre de 2000 daN qui reste très inférieure à la résistance au seuil d'élasticité qui est de l'ordre de 8600 daN. On peut aussi raisonner en termes de contraintes moyennes dans la section transverse de la bande, la tension de 2000 daN correspondant à une contrainte moyenne de l'ordre de 308 MPa ladite contrainte moyenne restant très inférieure à la limite élastique $\sigma_E$ de l'ordre de 1300 MPa. Le principal inconvénient de cette solution de l'art antérieur est le coût élevé de la couche anti-gonflement puisqu'il est nécessaire de fournir 8 couches de bande de Kevlar® et de les installer autour de la conduite tubulaire.

Grâce à la présente invention, on peut réduire le nombre de couches de la bande anti-gonflement en pré-tensionnant les bandes selon le tableau I suivant. On observera dans ce tableau, que les mesures de tension sont exprimées en déca Newton, par le symbole daN .

<div align="center">Tableau I</div>

| Pré-tension $T_0$ des bandes lors de la fabrication | Ratio $T_0/L$ | Pré-contrainte $\sigma_0$ en % de la limite élastique des bandes | Nombre n de couches de Kevlar® | Gonflement radial maximal $\Delta R$ des armures | Tension maximale subie en service par chaque bande |
|---|---|---|---|---|---|
| 20 daN | 1.5 daN/cm | 0.2% | 8 | 1,5 mm | 2000 daN |
| 260 daN | 20 daN/cm | 3% | 7 | 1.5 mm | 2000 daN |
| 650 daN | 50 daN/cm | 7,5% | 6 | 1.5 mm | 2000 daN |
| 1170 daN | 90 daN/cm | 13,6% | 5 | 1.5 mm | 2000 daN |
| 2000 daN | 154 daN/cm | 23,2% | 4 | 1.5 mm | 2000 daN |
| 3400 daN | 262 daN/cm | 39,5% | 3 | 1.5 mm | 3400 daN |

La première ligne correspond à la pratique antérieure tandis que les cinq autres lignes correspondant à cinq modes de réalisation selon la présente invention.

Le mode de réalisation correspondant à la cinquième ligne de ce tableau est particulièrement avantageux. Il permet de diviser par deux le nombre de couches de Kevlar® par rapport à l'usage antérieur, tout en conservant un gonflement maximal des armures identique et tout en évitant de soumettre les bandes à des contraintes maximales supérieures à celles de l'usage antérieur. Dans ce mode de réalisation, la tension $T_0$ de pré-contrainte est égale à 2000 daN , ce qui correspond à une pré-contrainte de tension $\sigma_0$ égale à 23,2% de la limite élastique $\sigma_E$ , et à un ratio $T_0/L$ égal à 154 daN/cm.

Le mode de réalisation de la dernière ligne du tableau I est moins intéressant, bien qu'il permette de supprimer une couche supplémentaire de Kevlar®, car il requiert l'application d'une tension $T_0$ très élevée qui a pour inconvénients d'augmenter les contraintes en service dans les bandes, et de nécessiter l'emploi d'une spiraleuse de forte puissance pour réaliser l'opération d'enroulement desdites bandes.

Le mode de réalisation de la troisième ligne du tableau I présent l'intérêt de pouvoir être mis en oeuvre avec une spiraleuse de puissance modérée, tout en permettant un gain significatif sur le nombre de couches de Kevlar®.

Selon un second mode de mise en oeuvre, on réalise une conduite de diamètre intérieur de 230 mm. Elle comporte de l'intérieur vers l'extérieur les couches suivantes :

- une carcasse interne en feuillard agrafé inoxydable d'épaisseur 12,5 mm ;
- une gaine de pression d'épaisseur 10 mm ;
- une voûte de pression en fil de forme agrafé d'épaisseur 21 mm ;
- une couche polymérique anti-usure de1.5 mm d'épaisseur ;
- une première nappe d'armures de 5 mm d'épaisseur;
- une couche polymérique anti-usure de 1.5 mm d'épaisseur ;
- une deuxième nappe d'armures de 5 mm ;
- une couche anti-gonflement en bandes de Kevlar® ; et,
- une gaine externe polymérique de 10 mm d'épaisseur.

Cette structure est elle aussi destinée à être utilisée à des profondeurs de l'ordre de 3000 m. Selon l'art antérieur, la couche anti-gonflement de cette conduite comporte 6 couches de bandes tissées en Kevlare identiques à celles décrites dans le premier mode de mise en oeuvre ci-dessus.

Selon la présente invention, on peut réduire le nombre de couches de la bande anti-gonflement en pré-tensionnant les bandes selon le tableau II suivant :

Tableau II

| Pré-tension $T_0$ des bandes lors de la fabrication | Ratio $T_0/L$ | Pré- contrainte $\sigma_0$ en % de la limite élastique des bandes | Nombre n de couches de Kevlar® | Gonflement radial maximal $\Delta R$ des armures | Tension maximale subie en service par chaque bande |
|---|---|---|---|---|---|
| 20 daN | 1.5 daN/cm | 0,2 % | 6 | 1,5 mm | 2600 daN |
| 520 daN | 40 daN/cm | 6 % | 5 | 1.5 mm | 2600 daN |
| 1300 daN | 100 daN/cm | 15,1 % | 4 | 1.5 mm | 2600 daN |
| 3380 daN | 260 daN/cm | 39,3 % | 3 | 15 mm | 3380 daN |

La première ligne correspond à la pratique antérieure tandis que les 3 lignes suivantes correspondent à 3 modes de réalisation de la présente invention.

Le mode de réalisation de la troisième ligne est particulièrement avantageux, Il permet d'économiser deux couches de Kevlar® par rapport à l'usage antérieur, tout en conservant un gonflement maximal des armures identique et tout en évitant de soumettre les bandes à des contraintes maximales supérieures à celles de l'usage antérieur. Dans ce mode de réalisation, la tension $T_0$ de pré-contrainte est égale à 1300 daN , ce qui correspond à une pré-contrainte de tension $\sigma_0$ égale à 15,1% de la limite élastique $\sigma_E$ , et à un ratio $T_0/L$ égal à 100 daN/cm. Suivant le procédé selon l'invention, on évalue la pression maximale du fond marin $P_{ext}$ dans lequel la conduite tubulaire flexible sous-marine est susceptible d'être étendue, puis on détermine le nombre de couches n de bandes anti-gonflement et la tension longitudinale $T_0$ à appliquer à chacune de ces bandes selon le critère suivant faisant intervenir la pression maximale du fond marin $P_{ext}$, la largeur L de chaque bande et le rayon interne R de la couche de bandes la plus interne :

$$n\, T_0 > 0{,}04 \; R\, L\, P_{ext}$$

Enfin, une fois n et $T_0$ ainsi déterminés, on enroule sous la tension $T_0$ les n couches de bandes.

En effet, comme cela a été exposé plus haut, le contrôle du gonflement serait parfait si la pression de contact $P_0$ exercée contre la face externe des armures du fait de la pré-tension de la bande était égale la pression hydrostatique maximale du fond marin $P_{ext}$. Il n'y aurait alors plus aucune possibilité de gonflement, la bande reproduirait en fait la pression de serrage produite par une gaine externe étanche contre laquelle s'applique la pression hydrostatique du fond marin $P_{ext}$. Ceci reviendrait en fait à reproduire en annulaire inondé les pressions de contact d'un annulaire sec.

Cependant, il n'est pas nécessaire de rechercher une pression de pré-serrage $P_0$ aussi élevée, car il a été constaté que, de façon surprenante, les effets bénéfiques pour la conduite peuvent être obtenus dès lors que $P_0$ est

supérieur à 4% de la pression hydrostatique maximale du fond marin $P_{ext}$, et avantageusement de l'ordre de 10% de $P_{ext}$. Le coefficient 0,04 du critère cité plus haut correspond au critère de 4% car :

$$P_0 \approx (n\,T_0)\,/\,(R\,L) \implies P_O\,/\,P_{ext} \approx (n\,T_o)\,/\,(R\,L\,P_{ext})$$

Et par suite:

$$P_O\,/\,P_{ext} > 4\% \implies n\,T_o > 0,04\,R\,L\,P_{ext}$$

On peut aussi avantageusement déterminer la tension longitudinale $T_0$ et le nombre n de couches de telle sorte que la pression de pré-serrage $P_0$ soit supérieure à 10% de la pression hydrostatique maximale $P_{ext}$. Selon ce mode de réalisation, le critère de détermination de $T_0$ et de n devient alors:

$$n\,T_0 > 0,1\,R\,L\,P_{ext}$$

En reprenant les éléments du premier mode de mise en oeuvre présenté ci-dessus, où la pression maximale du fond marin $P_{ext}$ est égale à 300 bar, c'est à dire à 30 MPa, correspondant à une profondeur de 3.000 m, où le rayon R est égal à 216 mm, où l'épaisseur E de chaque bande est égale à 0,5 mm et où la largeur L de chaque bande est égale à 130 mm, on élabore le tableau III ci-dessous à l'aide du tableau I décrit plus haut. Plus précisément, les colonnes 3 et 4 du tableau III sont déduites des considérations ci-dessus, tandis que les autres colonnes sont reprises du tableau I présenté plus haut.

Tableau III

| Pré-tension $T_0$ | Nombre n de couches Kevlar® | $\sigma 0 = T0\,/\,(L \times E)$ | $(n\,\sigma 0\,E)\,/\,(R\,Pext)$ $= (n\,T_0)\,/\,(R\,L\,P_{exf})$ $\approx P_0\,/\,P_{ext}$ | Pré-tension en % de la résistance des bandes | Tension maximale subie en service par chaque bande |
|---|---|---|---|---|---|
| 20 daN | 8 | 3 MPa | 0,2 % | 0,2% | 2000 daN |
| 260 daN | 7 | 40 MPa | 2,1 % | 3% | 2000 daN |
| 650 daN | 6 | 100 MPa | 4,6 % | 7,5% | 2000 daN |
| 1170 daN | 5 | 180 MPa | 6,9 % | 13,6% | 2000 daN |
| 2000 daN | 4 | 308 MPa | 9,5 % | 23,2% | 2000 daN |
| 3400 daN | 3 | 523 MPa | 12 % | 39,5% | 3400 daN |

La première ligne correspond également à la situation selon l'art antérieur. La cinquième colonne fait apparaître à partir de la troisième ligne, les cas où $P_0$ est supérieur à 4% de la pression hydrostatique maximale du fond marin $P_{ext}$, tandis que la sixième colonne fait apparaître à partir de la troisième ligne, les cas où la contrainte de tension $\sigma_0$ est supérieure à 5% de la limite élastique $\sigma_E$.

Ainsi, on observera que le choix de l'un ou l'autre des critères de sélection du nombre de bandes anti-gonflement et de leur tension longitudinale $T_0$ de pose, conduit à adopter des conditions analogues de fabrication de la conduite tubulaire flexible.

Aussi, la présente invention concerne-t-elle également des conduites tubulaires flexibles présentant les caractéristiques précitées.

**Revendications**

1. Procédé de fabrication d'une conduite tubulaire flexible sous-marine (10) destinée au transport des hydrocarbures, ledit procédé étant du type selon lequel,

- on fournit une structure tubulaire étanche (12, 14, 16) recouverte d'au moins une couche (18, 20) de fils d'armure (38, 46) enroulés en hélice à pas long autour de ladite structure tubulaire pour pouvoir reprendre les efforts axiaux lorsque ladite structure tubulaire est étirée axialement,

- on enroule en hélice à pas court au moins un élément longitudinal continu (50) d'un matériau déformable autour de ladite couche (18, 20) de fils d'armure (38, 46) pour former une couche de maintien (24) apte à reprendre les efforts radiaux desdits fils d'armure lorsque ladite structure tubulaire se contracte axialement, ledit au moins un élément longitudinal continu (50) étant formé en une bande de largeur L,

- on enroule ledit au moins un élément longitudinal (50) sous tension longitudinale $T_0$ de manière à étirer ledit matériau déformable suivant un allongement relatif correspondant à une contrainte de tension $\sigma_0$ comprise entre 3% et 39,5 % de la valeur limite d'élasticité $\sigma_E$ dudit matériau déformable, ladite valeur limite d'élasticité $\sigma_E$ correspondant à une contrainte de tension au-delà de laquelle la déformation dudit matériau est irréversible ;

**caractérisé en ce qu'**on évalue la pression maximale du fond marin $P_{ext}$ dans lequel la conduite tubulaire flexible sous-marine est susceptible d'être étendue ; et,

- on détermine le nombre de couches n d'éléments longitudinaux (50) constituant des bandes anti-gonflement et la tension longitudinale $T_0$ à appliquer à chacune de ces bandes selon le critère suivant : n $T_0$ > 0,04 R L $P_{ext}$, faisant intervenir le rayon interne R de la couche de bandes la plus interne.

2. Procédé de fabrication d'une conduite tubulaire flexible la revendications 1, **caractérisé en ce qu'**on étire ledit matériau suivant un allongement relatif correspondant à une contrainte de tension $\sigma_0$ comprise entre le vingtième et le tiers de ladite valeur limite d'élasticité $\sigma_E$.

3. Procédé de fabrication d'une conduite tubulaire flexible selon la revendication 1 ou 2, **caractérisé en ce qu'**on forme une gaine externe étanche (22) autour de ladite couche de maintien (24).

4. Procédé de fabrication d'une conduite tubulaire flexible selon l'une quelconque des revendications 1 à 3, **caractérisé en ce qu'**on enroule une pluralité d'éléments longitudinaux continus (50) pour former ladite couche de maintien (24).

5. Procédé de fabrication d'une conduite tubulaire flexible selon l'une quelconque des revendications 1 à 4, **caractérisé en ce qu'**on fournit une structure tubulaire étanche (12, 14, 16) présentant un diamètre supérieur à 250 millimètres.

6. Procédé de fabrication d'une conduite tubulaire flexible selon l'une quelconque des revendications 1 à 5, **caractérisé en ce que** lesdits fils d'armure (38, 46) présentent une épaisseur inférieure à 6 millimètres.

7. Procédé de fabrication d'une conduite tubulaire flexible selon l'une quelconque des revendications 1 à 6, **caractérisé en ce qu'**on enroule lesdits fils d'armure (38, 46) en hélice à pas long selon un angle d'armage supérieur à 20°.

8. Conduite tubulaire flexible fabriquée selon l'une quelconque des revendications 1 à 7, **caractérisée en ce que** ladite contrainte de tension $\sigma_0$ dudit matériau déformable est comprise entre le dixième et le quart de ladite valeur limite d'élasticité $\sigma_E$.

**Patentansprüche**

1. Verfahren zur Herstellung einer flexiblen Unterwasser-Rohrleitung (10) zum Transport von Kohlenwasserstoffen, wobei das Verfahren von dem Typ ist, wonach:

- eine wasserdichte rohrförmige Struktur (12, 14, 16) bereitgestellt wird, die mit mindestens einer Schicht (18, 20) aus Armierungsdrähten (38, 46) bedeckt ist, die spiralförmig mit großer Steigung um die rohrförmige Struktur gewickelt werden, um die axialen Kräfte aufnehmen zu können, wenn die rohrförmige Struktur in axialer Richtung gedehnt wird,

- mindestens ein kontinuierliches längsgerichtetes Element (50) aus einem verformbaren Material spiralförmig mit kleiner Steigung um die Schicht (18, 20) aus Armierungsdrähten (38, 46) gewickelt wird, um eine Halteschicht (24) zu bilden, die dazu ausgebildet, die radialen Kräfte der Armierungsdrähte aufzunehmen, wenn sich die rohrförmige Struktur in axialer Richtung zusammenzieht, wobei das mindestens eine kontinuierliche längsgerichtete Element (50) aus einem Band mit der Breite L gebildet ist,

- das mindestens eine längsgerichtete Element (50) in der Form unter der längsgerichteten Spannung $T_0$ ge-

wickelt wird, dass das verformbare Material gemäß einer relativen Dehnung gedehnt wird, die einer Zugspannung $\sigma_0$ entspricht, die zwischen 3 % und 39,5 % des Elastizitätsgrenzwertes $\sigma_E$ des verformbaren Materials beträgt, wobei der Elastizitätsgrenzwert $\sigma_E$ einer Zugspannung entspricht, über die hinaus die Verformung des Materials irreversibel ist;

**dadurch gekennzeichnet, dass** der maximale Druck des Meeresbodens $P_{ext}$ bestimmt wird, in dem die flexible Rohrleitung gespannt werden kann; und

- die Anzahl n an Schichten aus längsgerichteten Elementen (50), die Anti-Quellungstreifen bilden, und die längsgerichtete Spannung $T_0$, die auf jeden dieser Streifen aufzubringen ist, anhand des folgenden Kriteriums: $n\,T_0 > 0,04\,R\,L\,P_{ext}$ bestimmt wird, wobei der Innenradius R der innersten Streifenschicht herangezogen wird.

2. Verfahren zur Herstellung einer flexiblen Rohrleitung nach Anspruch 1, **dadurch gekennzeichnet, dass** das Material gemäß einer relativen Dehnung gedehnt wird, die einer Zugspannung $\sigma_0$ entspricht, die zwischen einem Zwanzigstel und einem Drittel des Elastizitätsgrenzwertes $\sigma_E$ beträgt.

3. Verfahren zur Herstellung einer flexiblen Rohrleitung nach Anspruch 1 oder 2, **dadurch gekennzeichnet, dass** eine wasserdichte Außenhülle (22) um die Halteschicht (24) gebildet wird.

4. Verfahren zur Herstellung einer flexiblen Rohrleitung nach einem der Ansprüche 1 bis 3, **dadurch gekennzeichnet, dass** eine Vielzahl kontinuierlicher längsgerichteter Elemente (50) gewickelt wird, um die Halteschicht (24) zu bilden.

5. Verfahren zur Herstellung einer flexiblen Rohrleitung nach einem der Ansprüche 1 bis 4, **dadurch gekennzeichnet, dass** eine wasserdichte rohrförmige Struktur (12, 14, 16) bereitgestellt wird, die einen Durchmesser größer als 250 Millimeter aufweist.

6. Verfahren zur Herstellung einer flexiblen Rohrleitung nach einem der Ansprüche 1 bis 5, **dadurch gekennzeichnet, dass** die Armierungsdrähte (38, 46) eine Dicke kleiner als 6 Millimeter aufweisen.

7. Verfahren zur Herstellung einer flexiblen Rohrleitung nach einem der Ansprüche 1 bis 6, **dadurch gekennzeichnet, dass** die Armierungsdrähte (38, 46) spiralförmig mit großer Steigung in einem Armierungswinkel größer als 20° gewickelt werden.

8. Flexible Rohrleitung, hergestellt nach einem der Ansprüche 1 bis 7, **dadurch gekennzeichnet, dass** die Zugspannung $\sigma_0$ des verformbaren Materials zwischen einem Zehntel und einem Viertel des Elastizitätsgrenzwertes $\sigma_E$ beträgt.

**Claims**

1. A method for manufacturing a flexible tubular underwater pipe (10) intended to transport hydrocarbons, said method being of the type in which,

- a leakproof tubular structure (12, 14, 16) is provided, covered with at least one layer (18, 20) of armor wires (38, 46) wound in a helix with long pitch around said tubular structure to be able to take up the axial forces when said tubular structure is stretched axially,
- at least one continuous longitudinal element (50) made of a deformable material is wound in a helix with short pitch around said layer (18, 20) of armor wires (38, 46) to form a holding layer (24) capable of taking up the radial forces of said armor wires when said tubular structure contracts axially, at least one continuous longitudinal element (50) is formed in a strip of width L.
- at least one longitudinal element (50) is wound under longitudinal tension $T_0$ so as to stretch said deformable material according to a relative elongation corresponding to a tensile stress $\sigma_0$ between 3% and 39,5% of the elastic limit value $\sigma_E$ of said deformable material, said elastic limit value $\sigma_E$ corresponding to a tensile stress beyond which the deformation of said material is irreversible.

**characterized in that** the maximum pressure of the sea bed $P_{ext}$ in which the flexible underwater tubular pipe is likely to be laid is evaluated ; and

- the number of layers n of longitudinal elements (50) constituting anti-inflation strips is determined and the longitudinal tension $T_0$ to be applied to each of the strips according to the following criterion : $n \, T_0 > 0.04 \, R \, L \, P_{ext}$ involving the inner radius R of the innermost layer of strips.

2. The method for manufacturing a flexible tubular pipe as claimed in claim 1, **characterized in that** said material is stretched according to a relative elongation corresponding to a tensile stress $\sigma_0$ between a twentieth and a third of said elastic limit value $\sigma_E$.

3. The method for manufacturing a flexible tubular pipe as claimed in claim 1 or 2, **characterized in that** a leakproof outer sheath (22) is formed around said holding layer (24).

4. The method for manufacturing a flexible tubular pipe as claimed in any one of claims 1 to 3, **characterized in that** a plurality of continuous longitudinal elements (50) are wound to form said holding layer (24).

5. The method for manufacturing a flexible tubular pipe as claimed in any one of claims 1 to 4, **characterized in that** a leakproof tubular structure (12, 14, 16) is provided that has a diameter greater than 250 millimeters.

6. The method for manufacturing a flexible tubular pipe as claimed in any one of claims 1 to 5, **characterized in that** said armor wires (38, 46) have a thickness less than 6 millimeters.

7. The method for manufacturing a flexible tubular pipe as claimed in any one of claims 1 to 6, **characterized in that** said armor wires (38, 46) are wound in a helix with long pitch according to an armoring angle greater than 20°.

8. A flexible tubular pipe manufactured as claimed in any one of claims 1 to 7, **characterized in that** said tensile stress $\sigma_0$ of said deformable material is between a tenth and a quarter of said elastic limit value $\sigma_E$

Fig.1

Fig.2

Fig.3

Fig.4

Fig.5A

Fig.5B

Fig.6

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 03083343 A
- FR 2926347
- WO 2008135663 A
- WO 2008145861 A